**Europäisches Patentamt**

**European Patent Office**

**Office européen des brevets**

(19)

(11) Veröffentlichungsnummer: **0 300 328 B1**

# EUROPÄISCHE PATENTSCHRIFT

(12)

(45) Veröffentlichungstag der Patentschrift: **25.11.92**

(51) Int. Cl.5: **B32B 27/08**, B32B 27/30, B32B 27/32

(21) Anmeldenummer: **88111101.7**

(22) Anmeldetag: **12.07.88**

(54) Folie aus Weich-PVC und Verfahren zu deren Fertigung.

(30) Priorität: **23.07.87 DE 3724422**

(43) Veröffentlichungstag der Anmeldung:
**25.01.89 Patentblatt 89/04**

(45) Bekanntmachung des Hinweises auf die
Patenterteilung:
**25.11.92 Patentblatt 92/48**

(84) Benannte Vertragsstaaten:
**AT BE DE ES FR GB IT LU NL SE**

(56) Entgegenhaltungen:
**DE-A- 3 704 591**

(73) Patentinhaber: **J. H. Benecke AG**
**Beneckeallee 40**
**W-3000 Hannover 1(DE)**

(72) Erfinder: **Neumann, Bernhard, Dr. rer. nat.**
**Triftweg 6a**
**W-3330 Helmstedt(DE)**

(74) Vertreter: **Leine, Sigurd, Dipl.-Ing. et al**
**Dipl.-Ing. Sigurd Leine Dipl.-Phys. Dr. Norbert König Patentanwälte Burckhardtstrasse**
**1**
**W-3000 Hannover 1(DE)**

EP 0 300 328 B1

**Beschreibung**

Die Erfindung betrifft eine Folie der im Oberbegriff des Anspruchs 1 genannten Art sowie ein Verfahren gemäß Anspruch 8 zur Fertigung einer solchen Folie.

Marktübliche Folien der betreffenden Art mit glänzender Oberfläche lassen sich nicht ganz einfach in üblicher Weise aufwickeln, weil sich dann die matte Rückseite in die glänzende Oberfläche der jeweils darunter befindlichen Lage eindrücken und damit die Oberfläche mattiert und das Produkt unbrauchbar werden würde.

Aus diesem Grunde ist es bei derartigen marktüblichen Folien bekannt, jeweils zwei Folien, Glanzseite auf Glanzseite, reversibel zu dublieren und dann aufzuwickeln, so daß keine Beeinträchtigung der glänzenden Oberflächen erfolgt. Beim Verbrauch der Folien beim Endverbraucher werden die beiden Folien wieder auseinandergezogen. Die Dublierung stellt einen erhöhten Aufwand dar, weil zwei zu dublierende Folien bei der Folienfertigung nicht doppelt zur Verfügung stehen, vielmehr müssen immer erst zwei Wickel gebildet werden, von denen dann die Dublierung erfolgt. Auch das einfache, kurzzeitige Aufwickeln führt zu einer Beeinträchtigung des Glanzes, so daß es üblich ist, beim Dublieren die Folien noch einmal über heiße Walzen mit hochglänzender Oberfläche laufen zu lassen. Darüber hinaus ergeben sich Schwierigkeiten bei der Weiterverarbeitung, wenn z.B. aus der Folie ausgestanzte Teile nicht symmetrisch sind und daher ein Zuschnitt nicht in dublierter Form erfolgen kann.

Die gleiche Problematik ergibt sich auch bei Folien, die mit Dessins bedruckt sind, weil die Pigmente der Druckfarbe matt sind und damit bei einer Glanz-Glanz-Dublierung zu einer zusätzlichen Beeinträchtigung des Oberflächenglanzes führen.

Der Erfindung liegt die Aufgabe zugrunde, eine Folie der betreffenden Art zu schaffen, bei der ohne Dublierung ein Aufwickeln ohne Beeinträchtigung der glänzenden Oberfläche möglich ist.

Der Erfindung liegt außerdem die Aufgabe zugrunde, ein Verfahren zur Fertigung einer solchen Folie anzugeben.

Die der Erfindung zugrundeliegende Aufgabe wird durch die im Kennzeichen des Anspruchs 1 angegebene Lehre gelöst.

Es hat sich gezeigt, daß bei Verwendung einer Folie aus Polypropylen (PP) deren glänzende Oberfläche so dauerhaft ist, daß beim Aufwickeln nur einer derartigen Folie eine Beeinträchtigung der glänzenden Oberfläche durch die matte Rückseite im Wickel nicht stattfindet. Es kann daher mit nur einer Fertigungsanlage gearbeitet werden, das Aufwickeln auf nur einen Wickel ist einfach, und beim späteren Verbrauch ergeben sich keine Schwierigkeiten durch Auseinanderziehen dublierter Folien und Umdrehen zum Zwecke des ordnungsgemäßen Zuschnitts bei nicht symmetrischen Zuschnitten.

Es hat sich in überraschender Weise gezeigt, daß PP-Folien einen so guten Verbund mit PVC-Folien eingehen, daß beim Versuch der Verbundtrennung die PP-Folie unmittelbar an der Absatzstelle abreißt. Die Haftung des Verbundes ist also sogar größer als die Festigkeit der PP-Folie.

Ein weiterer Vorteil besteht darin, daß die Folie aus PP ohne jede Schwierigkeit so dick bemessen werden kann, daß als Substrat sogar eine matte Folie aus Weich-PVC verwendbar ist, da die matte Oberflächenstruktur der Folie aus PVC nicht auf die glatte Oberfläche der Folie aus PP durchschlägt.

Die Folie aus PP kann transparent oder farbig sein. Sie kann auch eine Oberfläche mit einer Prägung, insbesondere einer Narbung, einem Druck oder einem Perlmutt-Effekt aufweisen, wobei jedoch der glänzende Oberflächeneffekt weiterhin besteht. Der Druck der Oberfläche der PP-Folie kann auf der der PVC-Folie zu- oder abgewandten Seite sein. Die Folie aus Weich-PVC läßt sich auf ihrer der PP-Folie zugewandten Oberfläche bedrucken. Die durch die Farbpigmente bedingte Mattigkeit der Oberfläche schlägt nicht durch die PP-Folie auf deren hochglänzende Oberfläche durch.

Ein Verfahren zur Fertigung einer Folie gemäß Anspruch 1 ist in Anspruch 8 angegeben.

Die Folien werden auf eine Temperatur zwischen ca. 100°C und 150°C erwärmt und danach gegeneinandergepreßt. Zur Erwärmung dient zweckmäßigerweise eine rotierende Heizwalze, die eine Temperatur zwischen 100°C und 160°C hat und um die die Folien teilweise geführt sind.

Das Zusammenpressen der Folien erfolgt zweckmäßigerweise in einem Spalt einer Walzenpresse, die aus einer Gummiwalze und einer Walze besteht, deren Oberfläche glatt ist und/oder eine Prägekonturierung aufweist und der die Folie aus PP zugewandt ist. Trotz einer Prägekonturierung geht der hochglänzende Oberflächeneffekt nicht verloren.

Beispiel 1

Auf eine Folie aus Weich-PVC, bestehend aus 70 Teilen PVC, 30 Teilen DOP (Dioctylphtalat) und 2 Teilen Stabilisator, wird bei einer Temperatur von ca. 130°C eine transparente, heißsiegelbare PP-Folie mit einer Dicke von 0,021 mm der Firma Mobil Plastics Europe mit der Typenbezeichnung 21 MB 621® aufkaschiert.

Beispiel 2

Auf eine Folie aus Weich-PVC wie bei Beispiel 1 wird eine mehrschichtige, geschäumte PP-Folie mit Perlmutt-Effekt der gleichen Firma mit der Typenbezeichnung 36 MO 747® bei einer Temperatur von ca.130° C aufkaschiert.

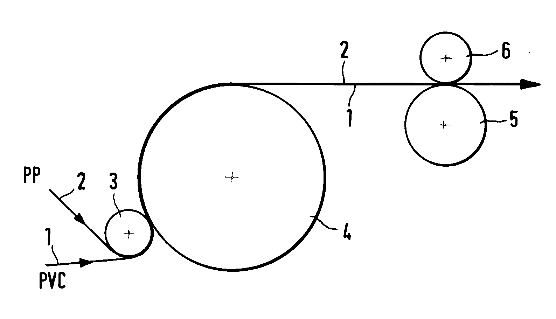

Anhand eines in der Zeichnung dargestellten Ausführungsbeispieles soll das erfindungsgemäße Verfahren zur Fertigung einer Folie gemäß der Erfindung näher erläutert werden.

Von nicht dargestellten Wickeln wird Folie 1 aus Weich-PVC und Folie 2 aus PP zunächst um eine Umlenkwalze 3 und dann um eine Heizwalze 4 geleitet, deren Temperatur zwischen 100° C und 160° C einstellbar ist. Die Umfangsgeschwindigkeit der Heizwalze 4 ist so bemessen, daß unter Berücksichtigung des Umschlingungsweges das Folienpaar auf eine Temperatur von ca. 80° C bis 150° C aufheizbar ist. Die Umfangsgeschwindigkeit der Heizwalze beträgt typischerweise 10 m pro Minute.

Die Folien 1 und 2 durchlaufen dann eine Walzenpresse bestehend aus einer Gummiwalze 5 und einer Prägewalze 6, wo der Verbund zwischen den beiden Folien unter Druck und Wärme hergestellt wird. Die Folie 1 aus PVC ist dabei der Gummiwalze 5 zugewandt, während die Folie 2 aus PP der Prägewalze 6 zugewandt ist. Trotz der Oberflächenkonturierung der Prägewalze 6 geht der hochglänzende Oberflächeneffekt der Folie 2 aus PP nicht verloren. Bei der Prägewalze 6 kann es sich auch um eine Walze mit glatter Oberfläche handeln.

**Patentansprüche**

1.  Folie aus Weich-PVC (Polyvinylchlorid), deren eine Oberfläche glänzend und deren andere Oberfläche matt ist, **dadurch gekennzeichnet,** daß die glänzende Oberfläche durch Aufkaschieren einer dünnen Folie (2) aus PP (Polypropylen) auf die Folie (1) aus Weich-PVC hergestellt ist.

2.  Folie nach Anspruch 1, **dadurch gekennzeichnet,** daß die Folie (2) aus PP transparent ist.

3.  Folie nach Anspruch 1, **dadurch gekennzeichnet,** daß die Folie (2) aus PP farbig ist.

4.  Folie nach Anspruch 2, **dadurch gekennzeichnet,** daß die Oberfläche der PP-Folie auf der der PVC-Folie zugewandten Seite bedruckt ist.

5.  Folie nach Anspruch 1 oder 2, **dadurch gekennzeichnet,** daß die Oberfläche der PP-Folie auf der der PVC-Folie abgewandten Seite bedruckt ist.

6.  Folie nach Anspruch 2, **dadurch gekennzeichnet,** daß die Folie (1) aus Weich-PVC auf ihrer der Folie (2) aus PP zugewandten Oberfläche bedruckt ist.

7.  Folie nach Anspruch 1, **dadurch gekennzeichnet,** daß die Oberfläche der Folie (2) aus PP eine Prägung, insbesondere eine Narbung oder einen Perlmutt-Effekt aufweist.

8.  Verfahren zur Fertigung einer Folie gemäß Anspruch 1, **dadurch gekennzeichnet,** daß die Folien auf eine Temperatur zwischen ca. 100° C und 150° C erwärmt und danach gegeneinandergepreßt werden.

9.  Verfahren nach Anspruch 8, **dadurch gekennzeichnet,** daß die Erwärmung mittels einer rotierenden Heizwalze (4) erfolgt, die eine Temperatur zwischen 100° C und 160° C hat und um die die Folien (1, 2) teilweise geführt sind.

10. Verfahren nach Anspruch 8, **dadurch gekennzeichnet,** daß das Zusammenpressen der Folien (1, 2) in einem Spalt einer Walzenpresse erfolgt, die aus einer Gummiwalze (5) und einer Walze (6) besteht, deren Oberfläche glatt ist und/oder eine Prägekonturierung aufweist und der die Folie (2) aus PP zugewandt ist.

**Claims**

1.  A soft PVC (polyvinyl chloride) sheet, one surface of which is shiny and the other surface of which is matt,
    **characterised in that** the shiny surface is produced by laminating a thin PP (polypropylene) sheet on the soft PVC sheet (1).

2.  A sheet according to Claim 1,
    **characterised in that** the PP sheet (2) is transparent.

3.  A sheet according to Claim 1,
    **characterised in that** the PP sheet (2) is coloured.

4.  A sheet according to Claim 1,
    **characterised in that** the surface of the PP sheet is printed on to the side turned towards the PVC sheet.

5.  A sheet according to Claim 1 or 2,
    **characterised in that** the surface of the PP sheet is printed on to the side remote from the PVC sheet.

**6.** A sheet according to Claim 2,
**characterised in that** the soft PVC sheet (1) is printed on its surface turned towards the PP sheet (2).

**7.** A sheet according to Claim 1,
**characterised in that** the PP sheet (2) has an embossed surface, in particular a grained or a nacreous effect.

**8.** A process for making a sheet as specified in Claim 1,
**characterised in that** the sheets are heated to a temperature of between 100° C and 150° and then pressed against one another.

**9.** A process according to Claim 8,
**characterised in that** heating is performed by means of a rotating heating roll (4), which has a temperature of between 100° C and 160° and around which the sheets (1, 2) are partly guided.

**10.** A process according to Claim 8,
**characterised in that** the sheets (1, 2) are pressed together in a slot of a roll press, which consists of a rubber roll (5) and a roll (6), the surface of which is smooth and/or has embossed contours and towards which the PP sheet (2) is turned.

**Revendications**

**1.** Feuille en PVC mou (chlorure de polyvinyle) dont une surface est brillante et l'autre surface lisse,
caractérisée en ce que la surface brillante est fabriquée par laminage d'un feuille mince (2) en PP (polypropylène) sur la feuille (1) en PVC mou.

**2.** Feuille selon la revendication 1,
caractérisée en ce que la feuille (2) en PP est transparente.

**3.** Feuille selon la revendication 1,
caractérisée en ce que la feuille (2) en PP est colorée.

**4.** Feuille selon la revendication 2,
caractérisée en ce que la surface de la feuille en PP est imprimée sur la face tournée vers la feuille en PVC.

**5.** Feuille selon la revendication 1 ou 2,
caractérisée en ce que la surface de la feuille en PP est imprimée sur la face opposée à la feuille en PVC.

**6.** Feuille selon la revendication 2,
caractérisée en ce que la feuille (1) en PVC mou est imprimée sur sa surface tournée vers la feuille (2) en PP.

**7.** Feuille selon la revendication 1,
caractérisée en ce que la surface de la feuille (2) en PP présente un estampage, en particulier un grainage ou un effet de nacre.

**8.** Procédé de fabrication d'une feuille selon la revendication 1,
caractérisé en ce que les feuilles sont chauffées à une température entre environ 100° C et 150° C et ensuite pressées l'une contre l'autre.

**9.** Procédé selon la revendication 8,
caractérisé en ce que le chauffage est effectué au moyen d'un rouleau de chauffage (4) rotatif qui a une température entre 100° C et 160° C et autour duquel les feuilles (1, 2) sont guidées partiellement.

**10.** Procédé selon la revendication 8,
caractérisé en ce que la compression des feuilles (1, 2) ensemble est effectuée dans une fente d'une presse à rouleaux qui est constituée d'un rouleau en caoutchouc (5) et d'un rouleau (6) dont la surface est lisse et/ou présente un contour d'estampage et qui est tournée vers la feuille (2) en PP.